# EUROPEAN PATENT APPLICATION

(11) **EP 0 652 379 A1**
(43) Date of publication of application: **10.05.1995**
(21) Application number: 94308113.3
(22) Date of filing: 03.11.1994
(51) Int. Cl.: F16B 13/08

(54) **Anchor assembly and anchoring method for fixing the anchor assembly**

(30) Priority: 04.11.1993 JP 63910/93; 25.11.1993 JP 319175/93
(71) Applicant: N.A.B. Co Ltd, Sagamihara-shi, Kanagawa-ken (JP)
(72) Inventor: Watanuki, Takeo, Sagamihara-shi Kanagawa-ken (JP)
(74) Representative: Nicholls, Michael John

(57) **Abstract**

An anchor assembly (10) and an anchoring method according to the present invention is developed to simplify the exchanging work of the fixed anchor assembly. For attaining this object, the anchor assembly (10) is provided with a lock assembly (4) divided into an upper half portion (4) and a lower half portion (3) by taking an acutely cut surface (12) as a boundary, and the lock assembly (4) is shaped in hollow cylindrical fashion, and the rod portion (6) provided with a threaded portion (7) on the upper end is inserted in the lock assembly (4). Together with providing an axial clearance between each of the internal peripheral surfaces of the upper (2) and lower (3) half portions and the internal peripheral surface of a hole destined to lock anchor assembly (4), the rod portion (6) is so constructed as to be provided with a nut (9) for fastening the lock assembly (4) and a stopper portion (8) for preventing the dropping out of the lock assembly (4) from the rod portion (6). An anchoring method according to the present invention is comprised with a method for expanding each of the acutely shaped edges of the upper (2) and lower portions (3) towards the internal peripheral surface of the hole in order to anchor the anchor assembly (10) and a method for returning the expanded portion to the original position by releasing the axially loaded force in order to easily remove the anchor assembly (10).

## Description

This invention relates to an anchor assembly and an anchoring method for fixing the anchor assembly, in particular relating to an anchor assembly and an anchoring method enabling simplification of an exchange work in installing apparatus or temporary structures.

As known, anchor assemblies are widely used as methods for fixing miscellaneous apparatus or board materials into concrete or mortar layers.

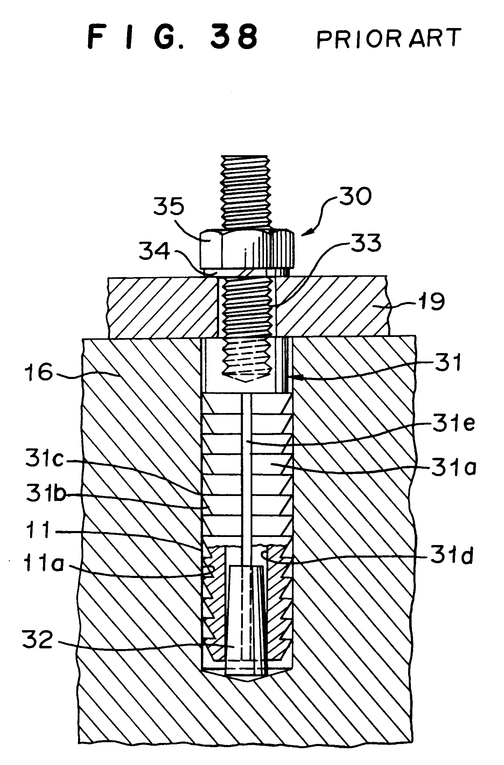

Up to now, as a first example of a conventional anchor, Figure 38 of the accompanying drawings shows an anchor 30 having plural stepped blades 31a on a main body 31 shaped as a round bar. In detail, the blades 31a are shaped so as to form upwardly orientated acute angled edges 31c by having plural tapered surfaces 31b expanding from the centre of the main body 31 towards the external diameter thereof separated by crosswise cut grooves 31e. A pin hole 31d is formed in the core from the upper end of the body 31. A taper pin 32 is inserted in the bottom portion of the pin hole 31. A stud bolt 33 is threaded in the upper end of the anchor 30 for fastening the instrument or the board material in the concrete layer 16 by applying a nut 35 through a washer.

With this anchor 30, when driving the anchor 30 in the cut concrete hole 11, the taper pin 32 inserted in the bottom portion of the anchor 30 is driven into the pin hole 31d. Accordingly, each of the blades 31a separated by the grooves 31e expands in the concrete hole 11, and each of the acutely angled edges 31c of the blades 31a bites into the peripheral surface lla of the concrete hole 11 fastening the anchor assembly 30. However, the anchor assembly 30 was apt to be eccentrically intruded into the concrete hole 11 depending on the driving condition and to become unstable owing to the uneven frictional resistance producing the resisting force against the extracting direction. Furthermore, it was difficult subsequently to extract the driven anchor assembly 30 owing to the resisting force of the acutely angled edges 31c of the blades 31a biting into the peripheral surface 11a of the concrete hole 11.

A second example anchor is shown in Japanese Utility Model number Sho 61-193149 and in Figures 39 to 41, that anchor assembly is separated into an upper half portion 21a and a lower half portion 21b by being cut so as to shape an acute angle ϑ at the bottom portion of an elongate bar-like steel material having a total length as much as 40 to 50 times its diameter, and being provided with a welded or bonded portion 23a shown in Figure 40 or a portion 23b or the cut portion left connected shown in Figure 41 and the bottom end of the lower half 21b is so-shaped as having a non-acute angle.

When applying the anchor assembly according to the second conventional example, at first, a hole is bored in the concrete or mortar layer, then the anchor assembly is driven in the concrete or mortar hole. In the position that the insertion of the driven anchor assembly stops, the abovementioned cut portion is loaded with the pressure and the upper cut portion and lower cut portion begin to move towards opposite directions owing to the disengaging of the partial connection being left in the cut portions, and the acutely angled edge portions begin to expand toward the exterior and to bite into the sides of the hole. The resistance against the extracting direction of the anchor is generated by the frictional resistance produced in the vicinity of the cut portions.

With respect to the anchoring method of the second example, the hole having a diameter enabling the anchor to be inserted by hand is bored in the specified position of an object such as hard base rock, concrete or mortar layer to a depth corresponding to one third or three quarters of the total length of the bar shaped steel. Then the bar-shaped steel is so inserted into the hole up to the bottom that the bottom cut portion faces downward. Then, the upper end of the anchor assembly is hammered. As the hammering cannot drive the anchor further in because the bottom portion is not acutely angled, the partially connected portion between the cut portion disengaged so that the upper half portion axially moves, and the upper and lower half portions move in opposite directions along the cut portions, and simultaneous with movement of the acute angled edge portions radially, the external surfaces of the upper and lower half portions come to push the peripheral wall of the hole and the cut portion does not completely separate. While the edges having the acute angles are expanding towards the peripheral surface of the hole, the peripheral faces of the upper and lower half portions are pushed to the peripheral surface of the hole. When the force extracting the anchor rod is loaded, the edge portion having the acute angle of the lower half portion resists the force by biting upon the peripheral surface of the hole. As the frictional forces generated between the external peripheries of the upper and lower half portions and the peripheral surface of the hole resist the extracting force, it becomes possible to prevent the extracting of the anchor assembly.

In applying the conventional anchoring methods, there arise various drawbacks.

At first, in the conventional anchoring art according to the first example, the anchor assembly is driven into the concrete hole. When extracting the fixed anchor assembly, it was not easy to take out. For example, the anchor is often used with temporary structures. When extracting the anchor assembly for dismantling the temporary structure, each of the acutely angled edges 31c of the blades 31a of the anchor assembly 30 bite upon the peripheral surface of the hole and this makes it difficult to withdraw the anchor assembly 30.

Further, even in the conventional anchoring art according to the second example, it was hard to withdraw the anchor assembly fixed in the concrete holes. Namely, in the anchor assembly installed in the condition fixed to the abovementioned object to be fixed, the acutely angled edges bite against the peripheral surface of the hole. Peripheral surface of the upper and lower half portions are also pushed against the peripheral surface of the hole. These jointly resist an axial extracting force. Accordingly, the installed anchor assembly cannot be extracted with ease. In other words, the lock assembly having the upper and lower half portions 21a and 21b is fixed as being radially moved together with encroaching upon the peripheral surface of the concrete hole. Accordingly, the anchor assembly extracting action becomes difficult, as the lock assembly radially moves and is apt to prevent the extraction of the anchor assembly fixed under the above conditions.

Furthermore, the second example requires provision of the connecting part 23b. This must be arranged so that when the upper and lower half portions 21a and 21b begin to slide along the cut surface 22 as far as the connecting portion 23b is not completely disengaged, these portions begin to move radially. Accordingly, together with rigidity for keeping the two lengths connected, the ductility for enabling sliding between the upper and the lower half portions of the specified range is required.

As there were many problems to be solved for satisfying discrepant demands and for restricting the selection of materials to be used, it was difficult to practice this anchoring method.

In conclusion, the object of this invention is to provide an anchoring method able not only to surely fix the object to be fixed to the concrete, but to remove the object with ease from the concrete.

An anchor assembly according to this invention is provided with the following technical properties. The anchor assembly is provided with a lock assembly divided into an upper half portion and a lower half portion by taking an acutely cut surface as a boundary, and the lock assembly is shaped in hollow cylindrical form, and the rod portion provided with threaded portion on the upper end is inserted into the lock assembly. Further, together with providing an axial clearance between each of the internal peripheral surfaces of the upper and lower half portions and the internal periphery of the concrete hole for enabling the lock assembly to move radially towards opposite directions along the acutely divided surface, the rod portion is so constructed as to be provided with a nut for fastening the lock assembly at the upper threaded portion and a stopper portion for preventing the dropping out of the lock assembly from the rod portion at the lower end of the rod portion.

In another embodiment according to this invention, the anchor assembly is provided with a plural of the lock assemblies arranged in series. Each unit lock assembly composing the assemblies is divided into the upper half portion and the lower half portion by taking the acutely cut surface as a boundary, and boundary surfaces of the neighboring unit lock assembly are shaped rectangular to the axial direction thereof.

The anchor assembly composed as described above is in use according to the following working operations. First, a hole for letting pass through the anchor assembly is bored on the specified position of the concrete or mortar layer.

In advance the second hole letting pass through the threaded rod portion of the anchor assembly is bored on the specified position of the equipment to be fixed.

Next, the lock assembly of the anchor assembly is pushed in the concrete or mortar hole. Simultaneously, the rod portion of the anchor assembly is passed through the second hole bored in the equipment. The nut is then engaged with the threaded portion of the anchor rod portion.

Then the fastening pressure of the nut is transmitted to the lock assembly through the equipment. Accordingly, the pressure generated by the nut is added to the cut section of the lock assembly. Namely, in the case of the first embodiment of the present invention, the lock assembly becomes pressed between the nut and the stopper portion, and in the case of the second embodiment, the upper half portion becomes pressed between the nut and the lower half portion engaged with the rod portion, and the upper half portion and the lower half portion become staggered along the cut surface of cut portions.

Simultaneous with the extrusion of the acutely angled edges of the upper and lower half portions into the periphery of the first concrete hole by staggering, the tip of the acutely angled edges of the upper and lower half portions come to contact with the peripheral inner surface of the first hole.

The anchoring method according to the present invention is explained in more detail below:
A step for inserting a lock assembly separated into the upper half portion and the lower half portion by taking the acutely cut surface thereof as the boundary, until a bottom of a hole bored in a concrete layer;
a step for letting the upper half portion and the lower half portion slide each other towards opposite radial directions along the acutely cut section, while letting the lock assembly axially move by adding the axial force; and
a step for letting each of external surfaces of said upper and lower half portions press against the peripheral surface of the concrete hole and fix the anchor assembly, together with letting each of acutely angled edges of the upper and lower half portions intrude into the periphery of the concrete hole;
is further comprised with:
a step for letting the upper and lower half portions move in a range of axial clearance defined between each of the internal peripheral surfaces of the upper and lower half portions and the internal periphery of the concrete hole, after axial movements of the upper and lower half parts cease;
a step for letting said upper and lower half portions return to the original positions by releasing the force applied to the upper half portion; and
a step for enabling the anchor assembly to extract with ease from the concrete hole.

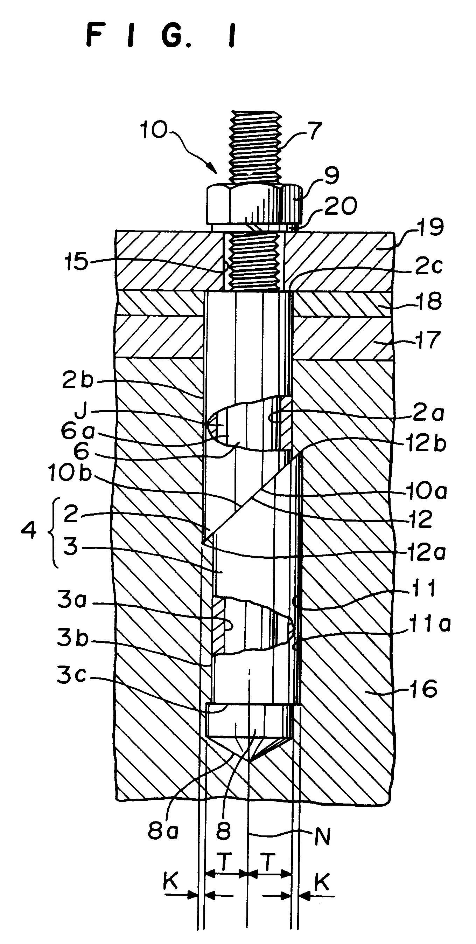

The invention will be further described by way of example, with reference to the accompanying drawings, in which:-
Fig. 1 to Fig. 11 show the first embodiment according to the present invention, wherein:
Fig. 1 is a drawing showing the working condition of the first embodiment according to the present invention;

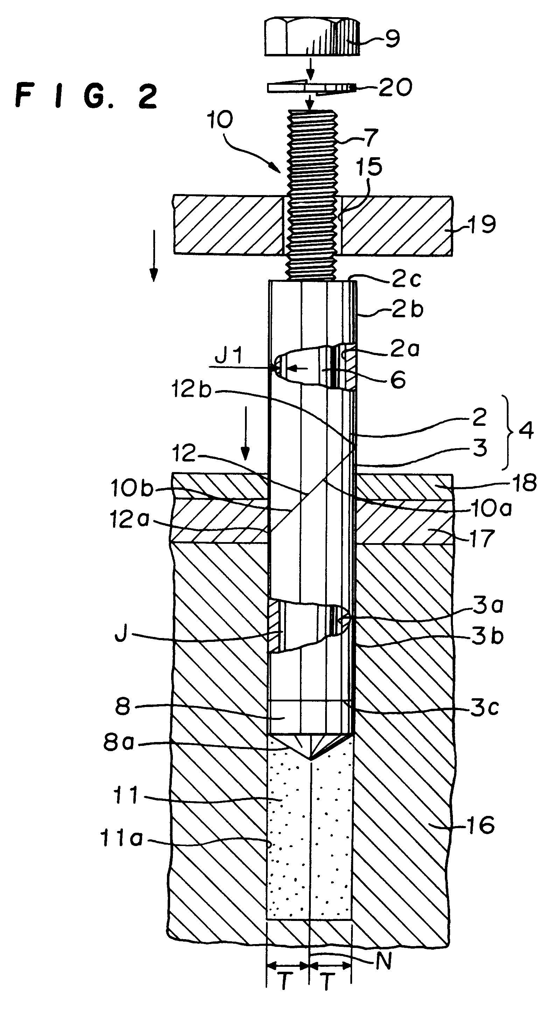

Fig. 2 is a drawing showing the condition of the anchor being inserted into a hole;

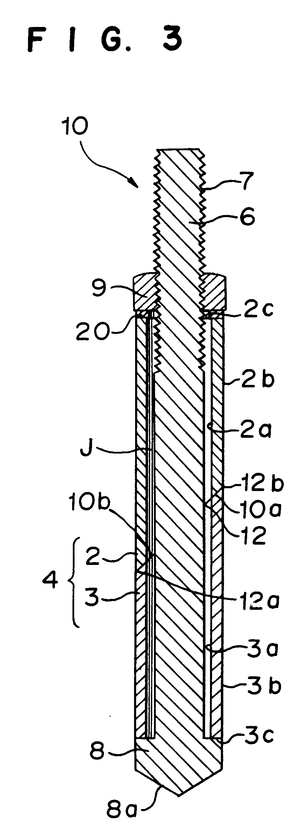

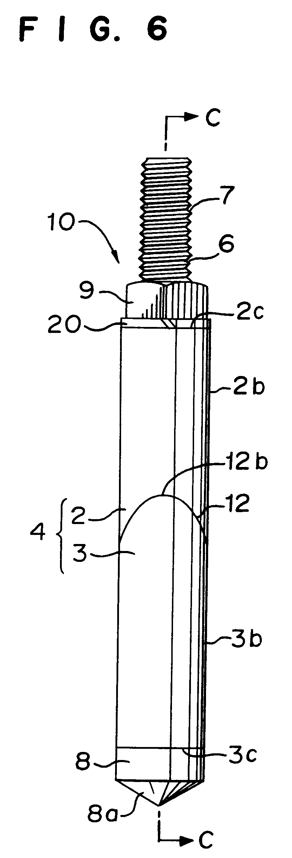

Fig. 3 is a vertical sectional view along the C-C line in Fig. 6;

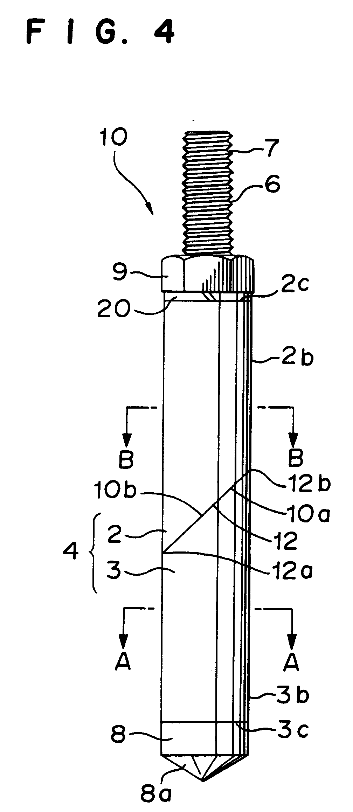

Fig. 4 is a front view of the anchor;

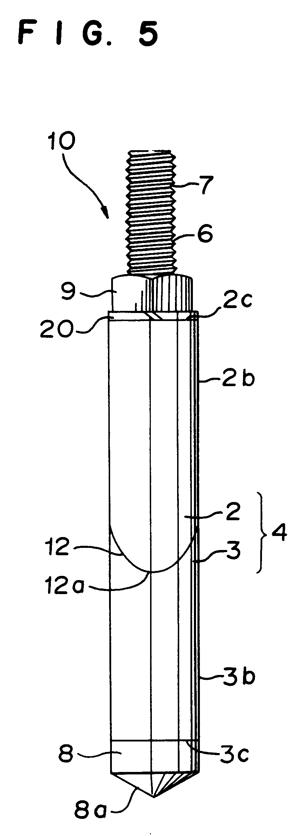

Fig. 5 is a left-handed side view of the anchor;
Fig. 6 is a right-handed side view of the anchor;

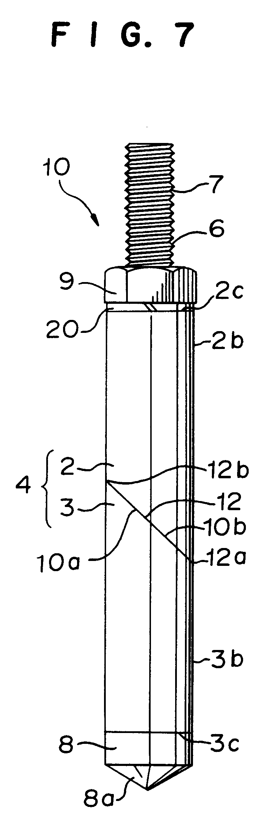

Fig. 7 is a back-sided view of the anchor;

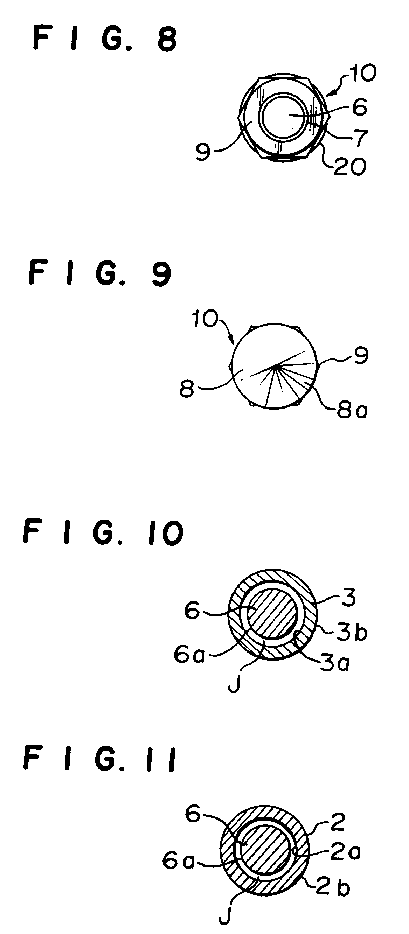

Fig. 8 is a plan view of the anchor;
Fig. 9 is a bottom view of the anchor;
Fig. 10 is a horizontal sectional view of the anchor viewed along A-A line in Fig. 4; and

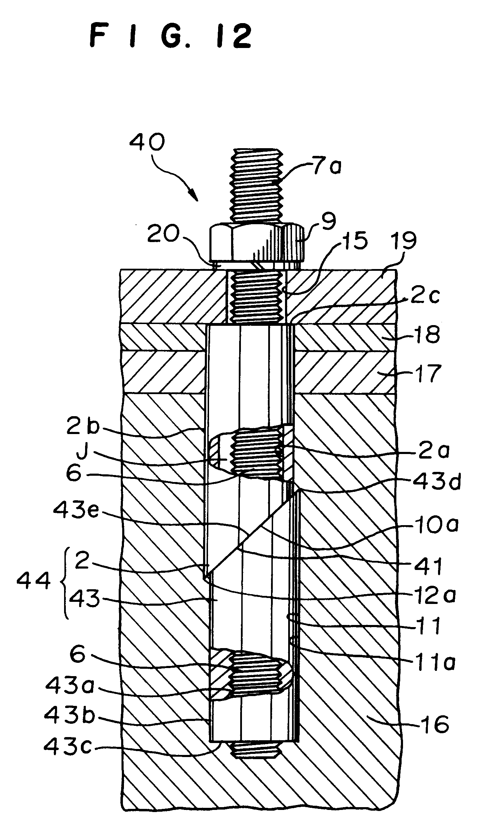

Fig. 11 is a horizontal sectional view looked along B-B line in Fig. 4.
Fig. 12 to Fig. 17 show an anchor of the second embodiment according to the present invention, wherein:
Fig. 12 is a drawing showing the working condition of the anchor according to the second embodiment of the present invention;

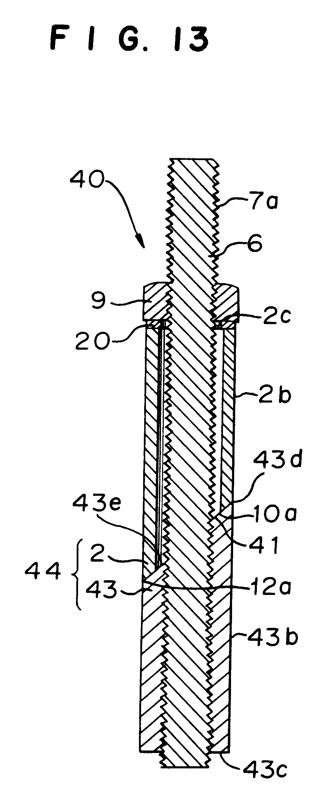

Fig. 13 is a vertical sectional view of the anchor shown in Fig. 12;

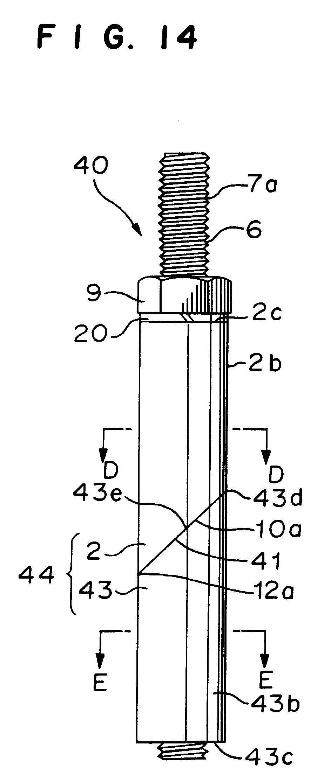

Fig. 14 is a plan view of the anchor shown in Fig. 12;

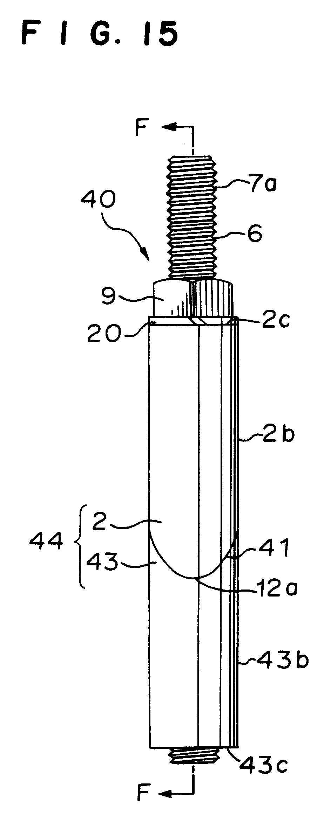

Fig. 15 is a left-handed side view of the anchor shown in Fig. 12;

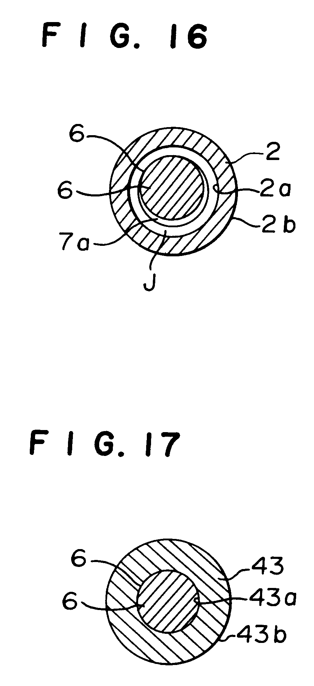

Fig. 16 is a horizontal sectional view along D-D line in Fig. 14;
Fig. 17 is a horizontal section view along E-E line in Fig. 14;

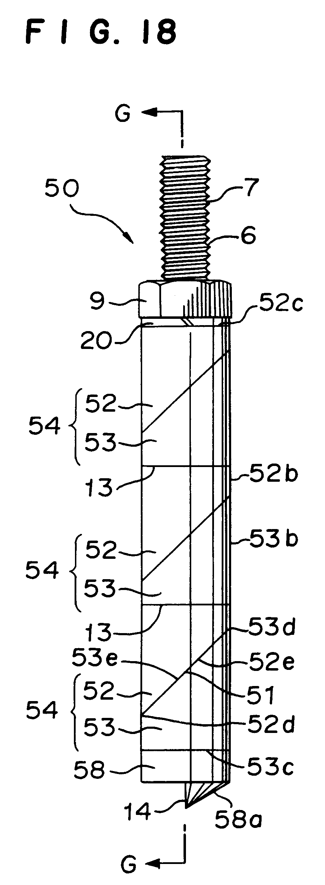

Fig. 18 to Fig. 20 show an anchor according to the third embodiment of the present invention, wherein:
Fig. 18 is a plan view of the anchor according to the third embodiment;

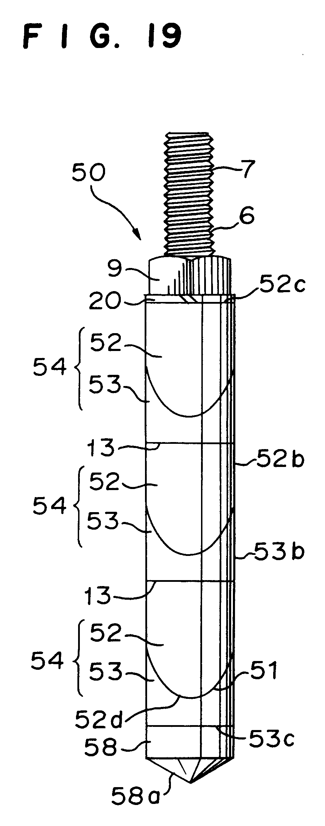

Fig. 19 is a left-handed side view of the anchor according to the third embodiment; and

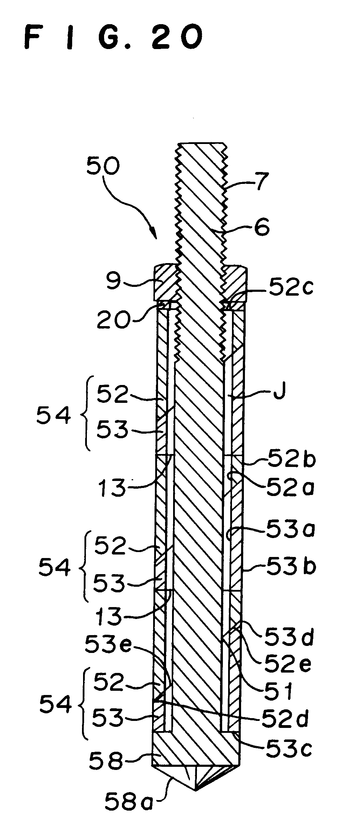

Fig. 20 is a vertical side view of the anchor along G-G line in Fig. 18.

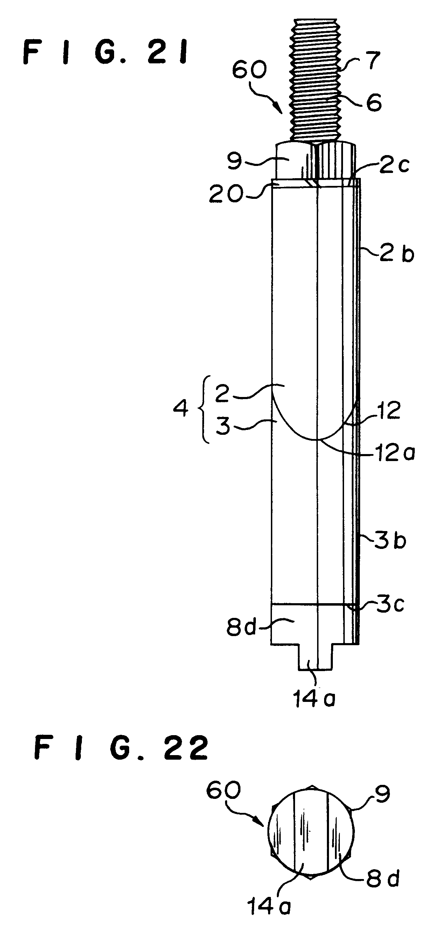

Fig. 21 and Fig. 22 show an anchor according to the fourth embodiment of the present invention, wherein:
Fig. 21 is a plan view of the anchor according to the fourth embodiment of the present invention; and
Fig. 22 is a bottom view of the anchor according to the fourth embodiment of the present invention.

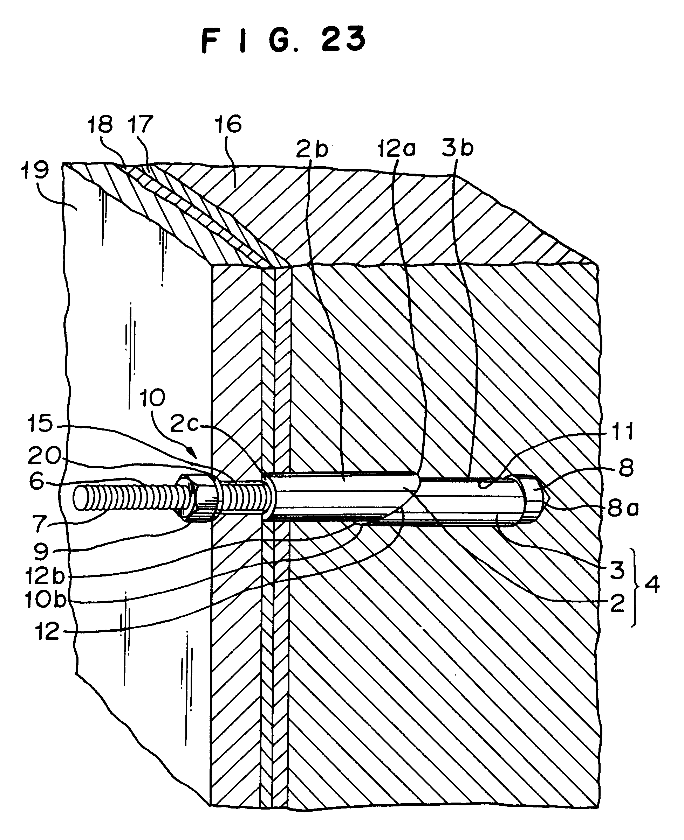

Fig. 23 to Fig. 29 show an anchoring method according to one embodiment of the present invention, wherein:
Fig. 23 is an obliqued view showing the finished installation of an ornamental plate into the concrete layer;

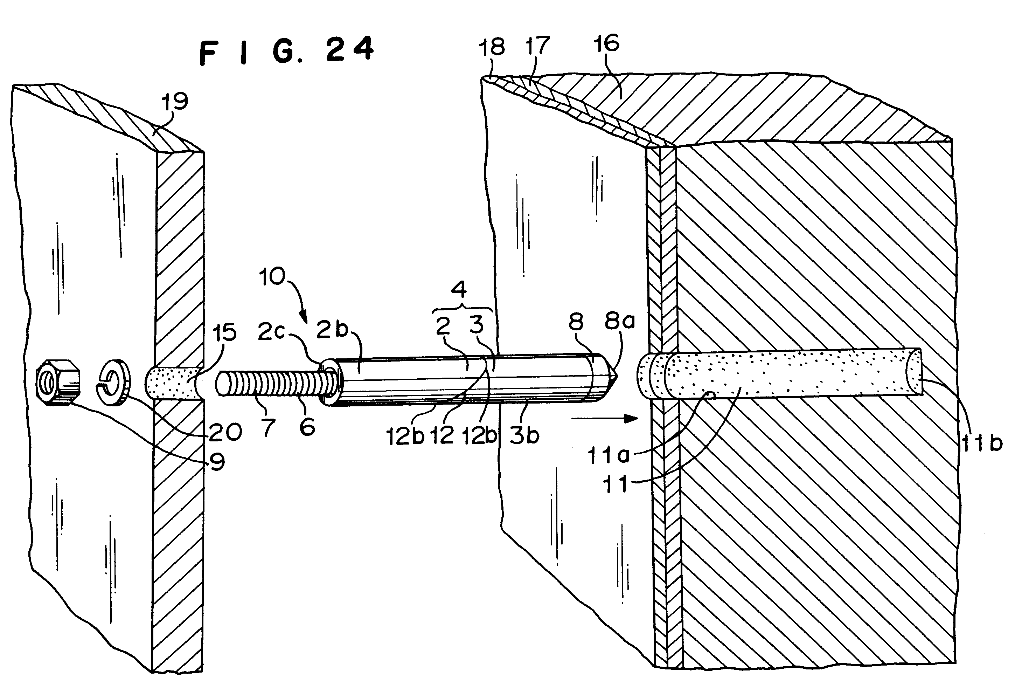

Fig. 24 is an obliqued view showing the condition of the anchor before installation in a concrete hole;

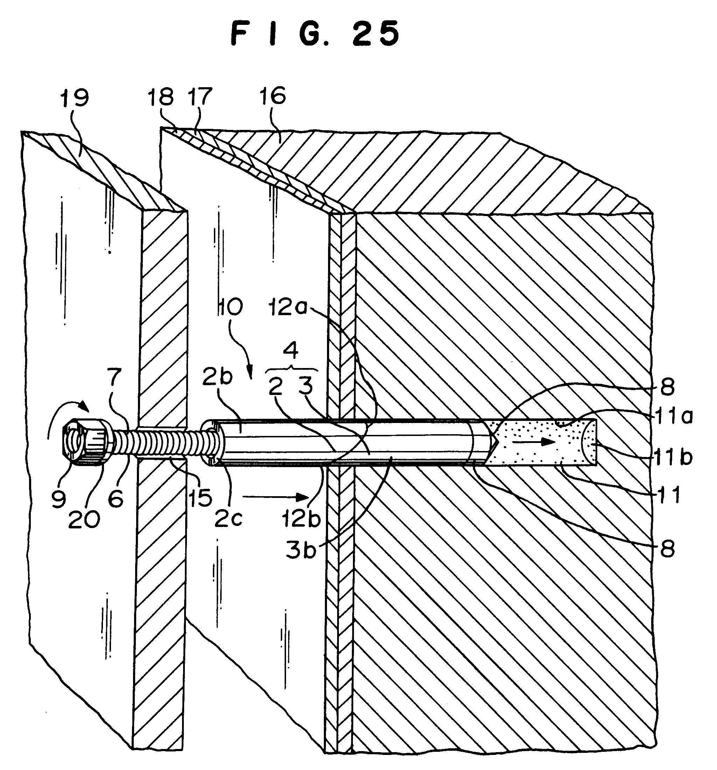

Fig. 25 is an obliqued view showing the condition of the anchor while installed into the concrete hole;

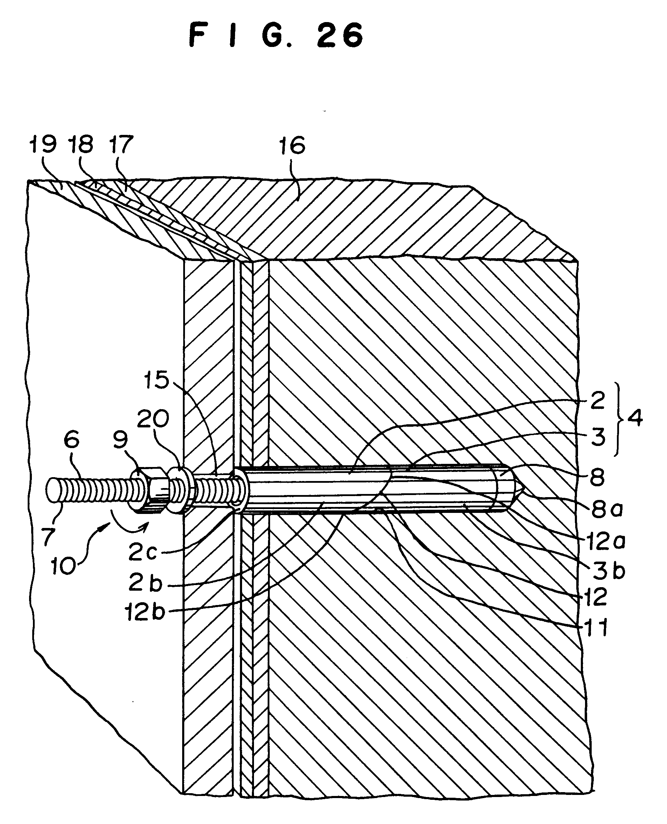

Fig. 26 is an obliqued view showing the condition of the anchor while the plate is fastened to the concrete layer;

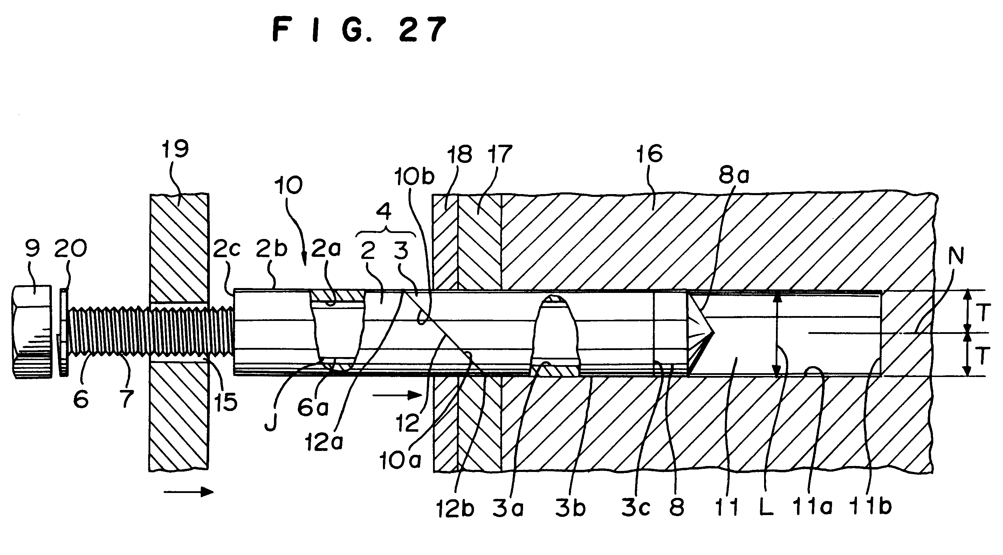

Fig. 27 is an enlarged view of Fig. 25;

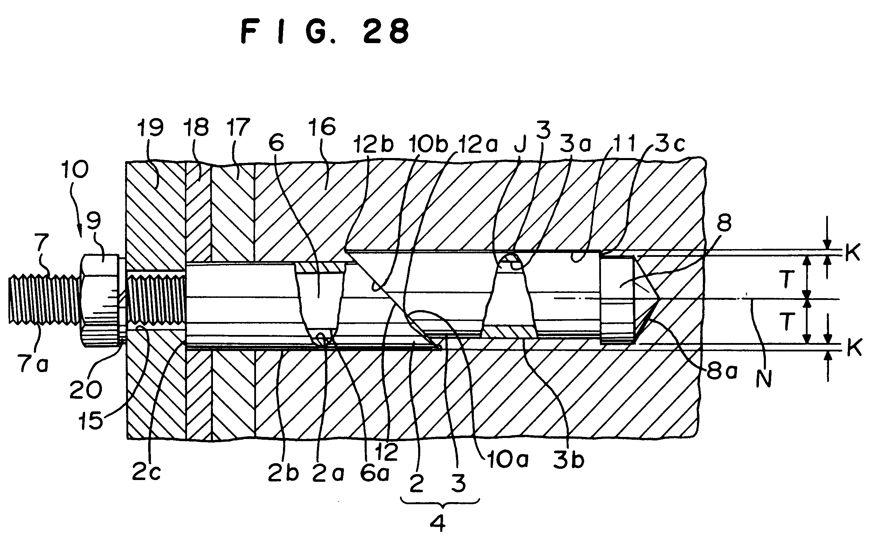

Fig. 28 is an enlarged view of Fig. 23; and

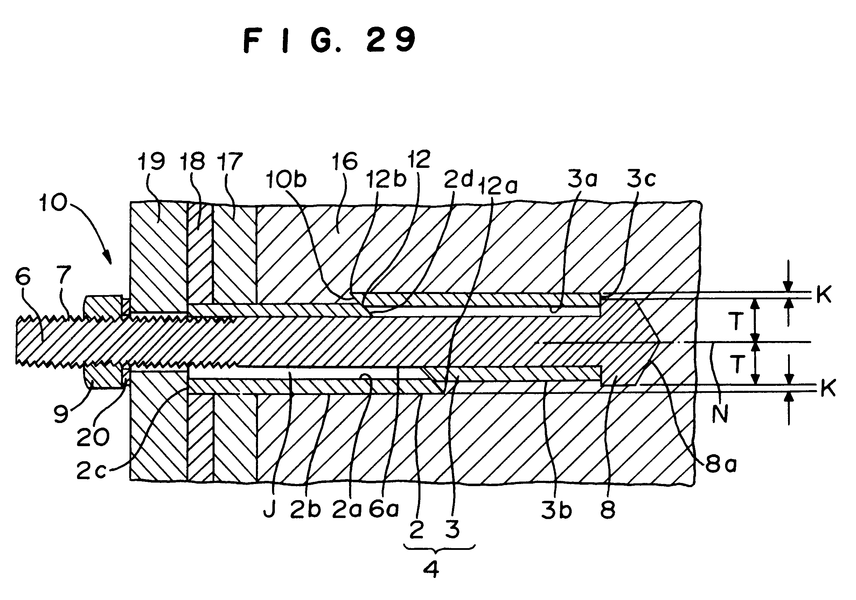

Fig. 29 is a vertical sectional view of the anchor shown in Fig. 28.

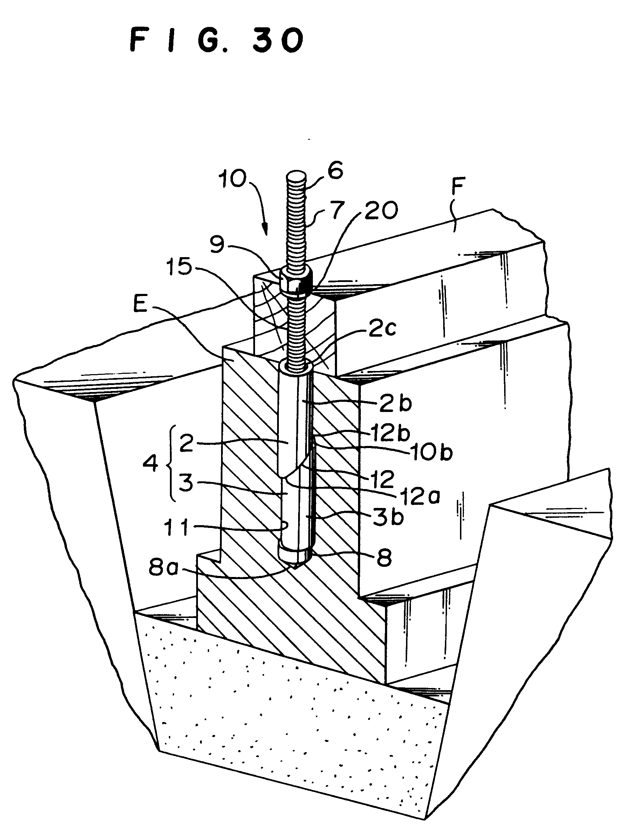

Fig. 30 is another embodiment of the anchoring method according to this invention and shows the obliqued view of the working example fixing a base plate to the foundation;

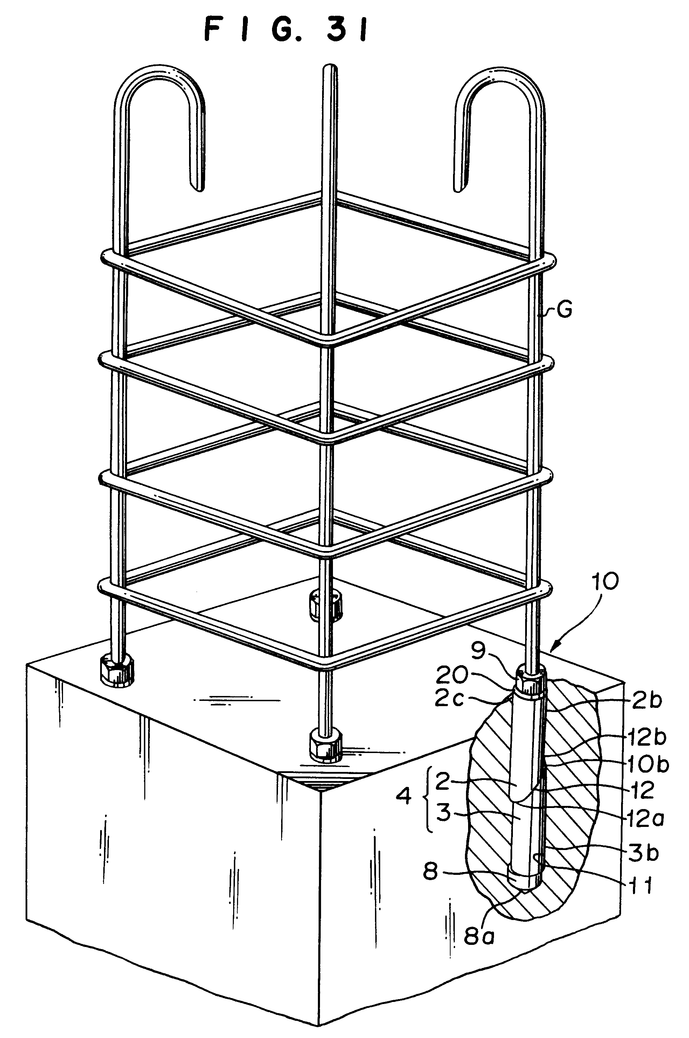

Fig. 31 is another embodiment of the anchoring method according to this invention, and shows an anchoring method of reinforced steel structure.

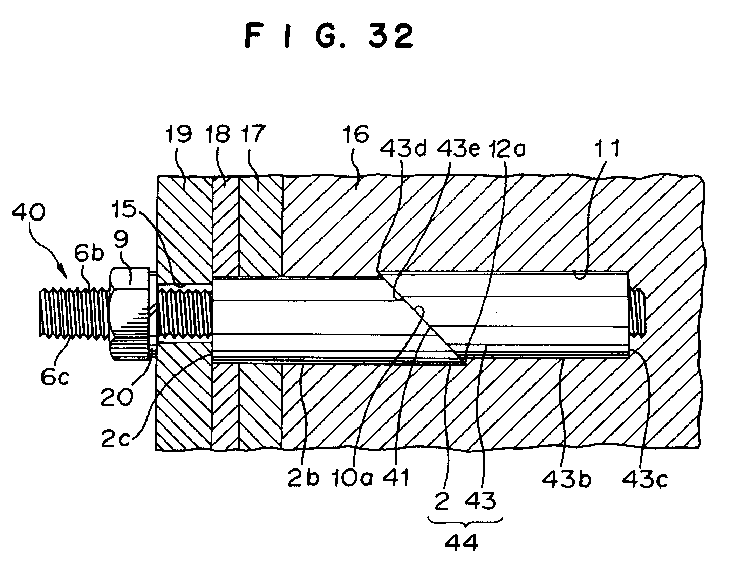

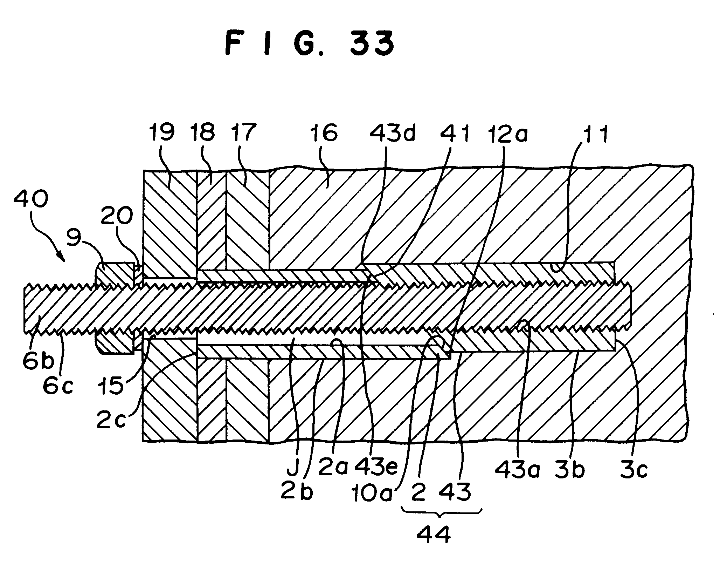

Fig. 32 and Fig. 33 show another embodiment according to the present invention, wherein;
Fig. 32 shows an ornamental plate installed on the concrete layer;
Fig. 33 shows a vertical sectional view of the anchor shown in Fig. 32.

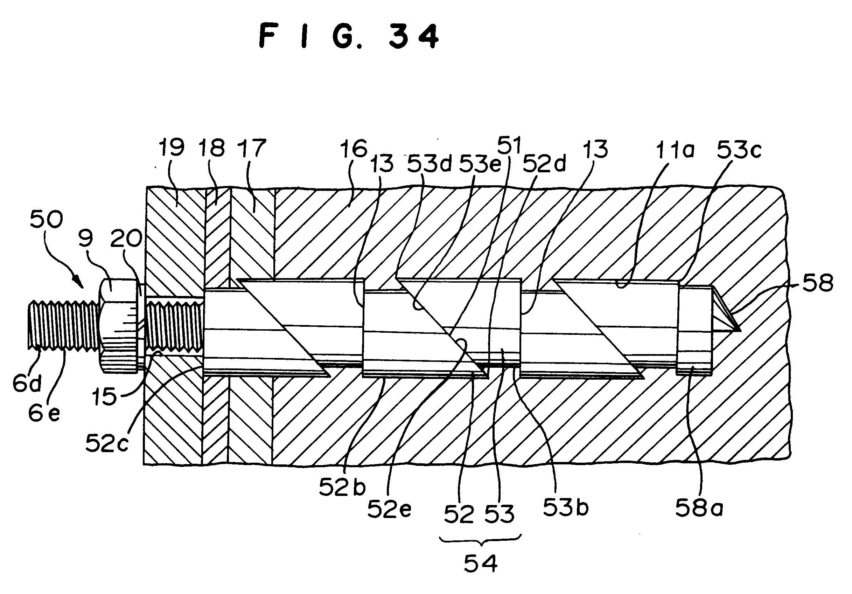

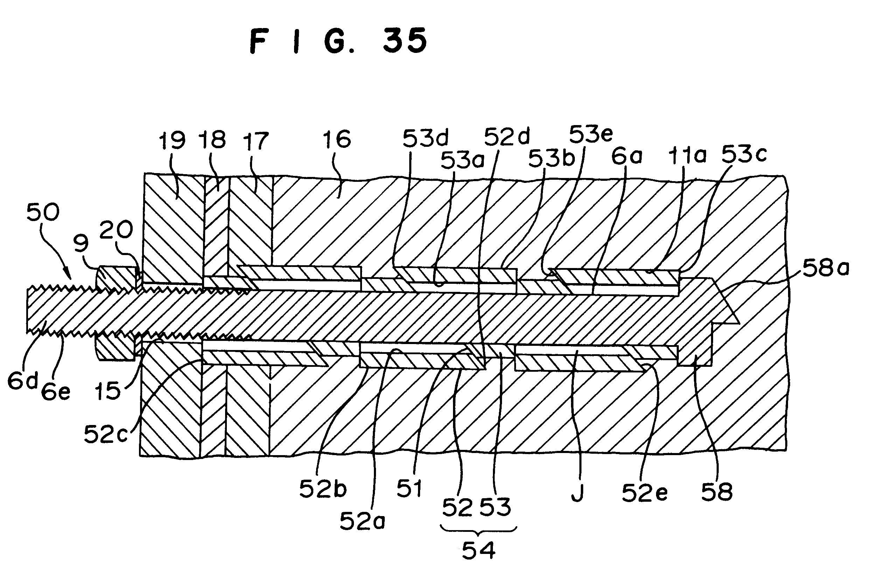

Fig. 34 and Fig. 35 show another embodiment of the anchoring method according to the present invention, wherein:
Fig. 34 shows the finished anchoring of an ornamental board into a concrete layer; and
Fig. 35 shows a vertical sectional view of the anchor shown in Fig. 34.

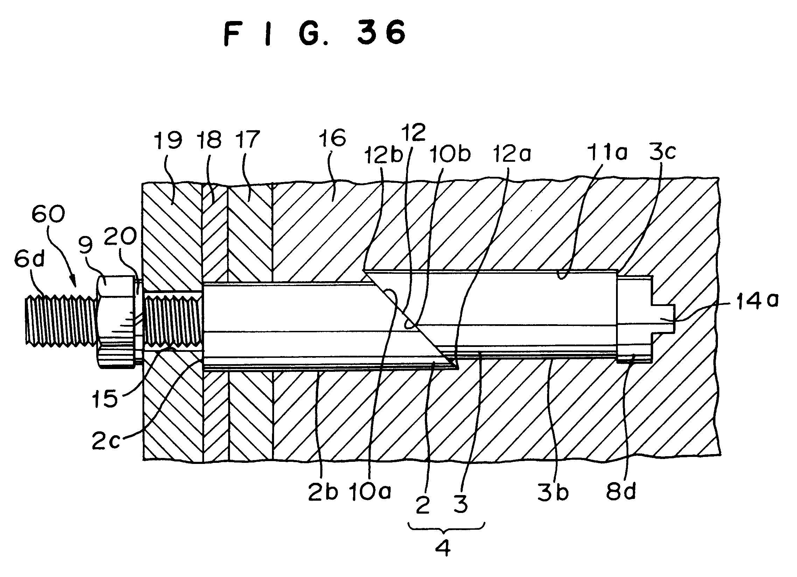

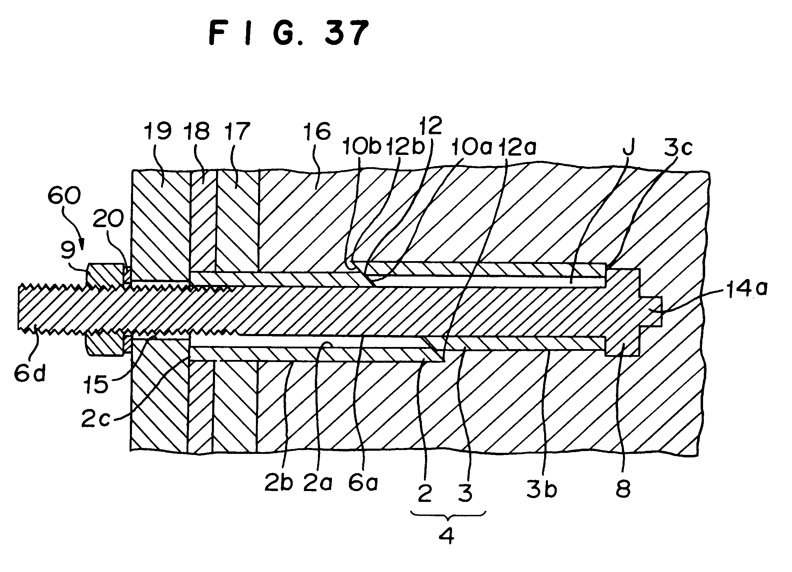

Fig. 36 and Fig. 37 show another embodiment of the anchoring method according to the present invention, wherein:
Fig. 36 shows another anchoring example for fixing an ornamental board into the concrete layer has been finished; and
Fig. 37 shows a vertical sectional view of an anchor shown in Fig. 36.
Fig. 38 shows a plan view of a partially sectioned anchor according to the first conventional embodiment.

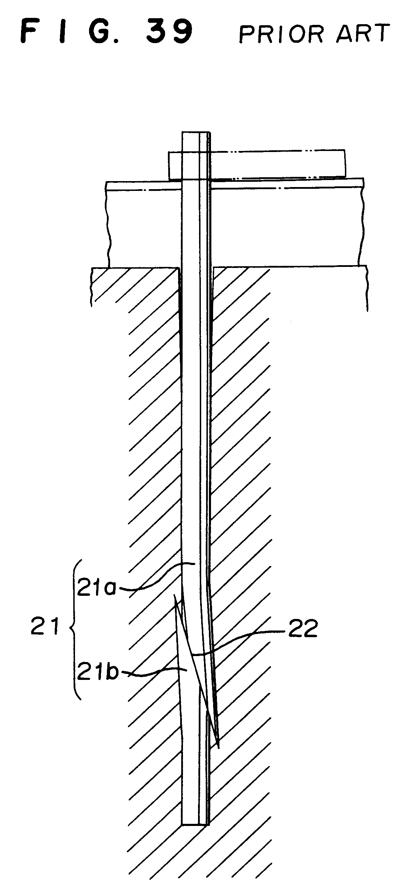

Fig. 39 is an anchoring method showing the second embodiment.

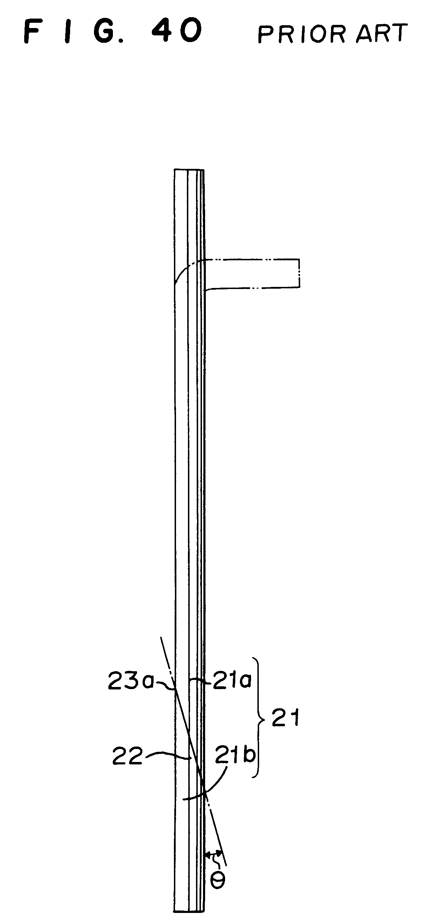

Fig. 40 is a side view of the anchor according to the conventional second embodiment.

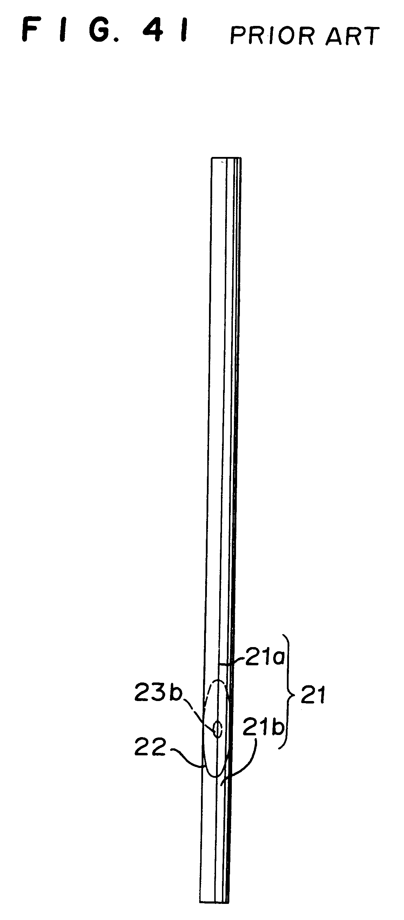

Fig. 41 is a plan view of the anchor according to the conventional second embodiment.

The first embodiment of an anchor according to the present invention is described in detail with reference to Fig. 1 to Fig. 11 as follows.

As shown in Figs. 1, 2 and Fig. 3, the anchor 10 is provided with:
a bar-like rod portion 6 having a threaded portion 7 on the upper end thereof;
a cylindrical lock portion 4 placed around the rod portion 6 and divided into two portions, namely an upper half portion 2 and a lower half portion 3 separated from each other by an acutely angled cut surface 12 against a vertical axis thereof; and
a hexagonal nut 9 engaging with the threaded portion 7.

A stopper portion 8 having the same size diameter as that of the lock portion 4 is integrated in one piece with the rod portion 6 for supporting the lock portion 4. In other words, the stopper portion 8 is used for preventing the lock portion 4 dropping off the rod portion 6. Further, a tip portion 8a of the stopper portion 8 contacts to a bottom of a concrete hole 11, when the anchor 10 is pushed down into the concrete hole 11 bored in a concrete layer 16, and prevents the rotation of the rod portion 6 accompanied with a rotation of the nut 9 by applying frictional force.

The above cylindrical lock portion 4 are divided into the upper half portion 2 and the lower half portion 3 by a cut portion 12 at an acute angle. Namely, the upper half portion 2 and the lower half portion 3 face each other at sections 10a and 10b. The external acutely angled edge portions are numbered 12a and 12b. The inner diameter of the lock portion 4 is slightly larger than the outer diameter of the rod portion 6, so that a lock portion moving space J exists between the inner peripheries 2a and 3a of the upper and lower half portions of the lock portions 4 and the outer periphery 6a of the rod portion 6. The moving space J provides room for the upper half portion 2 and the lower half portion 3 to move toward the peripheral surface 11a, respectively, when the half portions encroach the cut surface 12. Further, an upper end 2c of the upper half portion 2 and a lower end 3c of the lower half portion 3 are respectively shaped rectangular against their longitudinal axes, to facilitate pressing the cut section 12 of the lock portion 4, while the hexagonal nut 9 is being driven. As the hexagonal nut 9 engaging the threaded portion 7 of the rod portion 6 is installed in the condition that the lock portion 4 is placed between the stopper portion 8 of the rod portion 6 and the nut 9 itself, then it is possible to load the lock portion 4 by driving the nut 9 towards the lock portion 4.

An anchoring method using the anchor 10 is described as follows. The anchoring method for fixing some equipment 19 into the concrete layers 16 by using the anchor 10 is described as shown in Figures 1, 2 and 3. An inter-finishing material 17 and a finishing material 18 are covered in this sequence on the concrete layer 16.

At first, the first hole 11 is bored in the specified position of the concrete layer 16 for inserting the anchor 10 therein. The second hole 15 is also bored in the specified position of the equipment 1a to be anchored into the concrete layer 16. Next, the anchor assembly 10 minus the hexagonal nut 9 and a spring washer 19 is inserted into the first hole 11 bored in the concrete layer 16. Then the equipment 19 is installed into the rod portion 6 through the second hole 15. Then after the nut 9 and the washer 20 are engaged with the threaded portion 7, the nut 9 is driven to fasten the anchor assembly 10. Accordingly, a clamping force generated by the nut 9 is transmitted to the lock portion 4 through the equipment 1a to be anchored. In section 12 of the lock portion 12, the upper half portion 2 and the lower half portion 3 individually move toward another direction along the cut section 10b. Acutely angled edge portion 12a of the upper half portion 2 and acutely angled edge portion 12b of the lower half portion 3 individually expand towards the peripheral surface 11a of the first concrete hole 11 owing to the opposed movement. Concurrently with an external surface 2b sided in the acutely angled edge 12a of the upper half portion 2 coming in contact with the peripheral surface of the concrete hole 11, an external surface 3b sided in the acutely angled edge 12b of the lower half portion 3 also comes in contact with the peripheral surface of the concrete hole 11. Namely, referring to Fig. 1 and Fig. 2, before the nut 9 is fastened, the external peripheral surface 2b of the rock portion 4 is placed in the location apart as much as T from the center axis N of the rod portion 6 but after the nut 9 is fastened, the upper half surface 2 and the lower half surface 3 respectively move towards the opposite direction as much as distance K, and press the peripheral surface 11a of the concrete hole 11. The distance K equals the radial distance J1 (shown in Fig. 2) equivalent to the movable clearance J of the lock portion. Accordingly, the distance J1 equals half of the difference between the internal diameter of the lock portion 4 and the outside diameter of the rod portion 6. Accordingly, the above-mentioned lock portion 4 is placed between the nut 9 and the stopper portion 8, by fastening the nut 9, and pressure presses the cut section 12 of the locked portion. In this instance, the rotation of the rod portion 6 is prevented by the friction generated between the tip portion 8a of the stopper portion 8 and the bottom surface of the concrete hole 11. Further, as the cut section 12 is cut with the acute angle against the axial direction of the anchor assembly 10, then the pressure loaded on the cut section 12 is dispersed toward the directions wherein the acutely angled edges 12a and 12b of the upper and lower half portions 2 and 3 are apt to protrude externally. In this instance, as there is movable clearance J between the upper and lower half portions 2, 3 and the internal periphery of the concrete hole 11, then the two half portions 2 and 3 move towards opposite directions. Further, after the two half portions 2 and 3 oppositely moved, the upper half portion 2 came to contact with the one side of the internal surface wall 11a of the hole 11 and the lower half portion 3 also came to contact with another side of the internal surface wall 11a of the hole 11. Accordingly, when exchanging the anchor assembly 10, it may be possible to take out the assembly 10 after the nut 9 is loosened. As understood by reading the above description, a diameter of the hole 11 bored in the concrete layer or the like is so determined that the lock portion 4 is able to press the peripheral wall surface 11a of the hole 11 after being placed in the locked condition as shown in Fig. 1. It then becomes possible to determine the amount of the above-mentioned movement K against the value T in miscellaneous values.

The second embodiment of the anchor according to the present invention is next described with reference to Fig. 12 to Fig. 17.

In this embodiment, only the parts different from the parts shown in the first embodiment are described in detail.

Namely, the anchor assembly 40 according to this second embodiment comprises:
a rod portion 6a threaded along the total length thereof;
an upper half portion 2 shaped a shown in the first embodiment;
a lower half portion 43 shaped as shown in the first embodiment except that the lower portion 43 is engaged with the rod portion 6a to not move rectangularly against the rod portion 6a; and
a hexagonal nut engaging with the rod portion 6a and a spring washer 20.

Namely, when fastening the nut 9, the upper half portion 2 is placed between the nut 9 and the lower half portion engaged to the rod portion 6a, and a cut section 41 becomes pressed. Then on the cut section 41, the upper half portion 2 and the lower half portion 43 move respectively toward another direction, the upper half portion 2 moves toward the direction that the acutely angled edge 12a moves, and the lower half portion 43 moves to the direction pressing the peripheral wall 11a of the concrete hole 11, together with the rod portion 6a. Further in this embodiment, the stopper portion 8 provided in the first embodiment (see Fig. 1 and Fig. 2) is not supplied. It may further be possible to shape the lower half portion 43 integrally in one piece with the rod portion 6a in this embodiment.

The third embodiment of the anchor assembly according to the present invention is next described with reference to Fig. 18 to Fig. 20. In this a plurality of lock portions each divided into an upper half portion 52 and a lower half portion 53 by taking a cut section 51 as a boundary are provided in one anchor. Boundary surfaces 13 of the neighboring lock portion constructing one unit are shaped rectangular faces along the longitudinal direction. When applying this anchor assembly in practical use, together with the upper half portion 52 and the lower half portion 53 of each of the plural of lock portions moving each other towards opposite directions, the acutely angled edges 52d and 53d externally expand, and finally the upper half portion 52 and the lower portion 53 press the internal wall surface 11a of the concrete hole 11.

Another fourth embodiment according to this invention is described with reference to Fig. 21 and Fig. 22 as follows. In this embodiment, on the tip of the stopper portion 8d, an extrusion 14a is shaped, and when inserting the anchor assembly 60 into the concrete hole 11, as the extrusion 14a encroaches upon the bottom of the hole 11, it becomes possible to securely prevent rotation of the rod portion 6d owing to the fastening of the nut 9. Furthermore, the extrusion 14a may be possible in any shape to prevent the rotation of the rod portion 6d.

The anchor assembly 10 shown in Fig. 1 as the first embodiment, the anchor assembly 40 shown in Fig. 12 as the second embodiment, the anchor assembly 50 shown in Fig. 18 as the third embodiment, and the anchor assembly 60 shown in Fig. 21 are described in the examples for anchoring the equipment 19 or the like into the concrete layer 16, but it may be possible to anchor the anchor assembly into the concrete hole 16 by bending the rod portion or by connecting the rod portion to another fixing member. It may further be possible to increase the anti-vibrational property by applying double nuts instead of the single nut 9.

As described above, by applying each of the anchor assembly 10, 40, 50 and 60, it becomes possible to move the upper half portion and the lower half portion of the lock portion against the opposite directions by fastening the nut 9, and to protrude externally the acutely angled edges of the upper half portion and the lower half portion and simultaneously to encroach both edges into the internal wall surface 11a of the concrete hole 11, and to let press the internal wall surface 11a with each external surface of the upper half portion and lower half portion. Accordingly, the resistances against the extraction of the anchor assembly, namely the resistance caused by the encroaching of the acutely angled edges and the resistance caused by the friction generated between the upper half portion and lower half portion and the internal wall surface of the concrete hole prevent the extraction of the anchor assembly such as 10, 40, 50 and 60.

Further, when wishing to exchange the anchor assemblies such as 10, 40, 50 and 60, it is possible to extract them simply by loosening the nut 9.

As described above in detail, by applying the anchor assembly according to the present invention, it goes without saying that it becomes possible to prevent the extraction of the anchor assembly by the resistance from the biting of the acutely angled edges into the concrete wall of the hole 10 and other frictional resistance between the external surfaces of the upper and lower half portions, and the peripheral wall of the hole. Also, it becomes possible to extract with ease the anchor assembly simply by loosening the nut, when preferring to exchange the anchor assembly, as the pushing force of the upper and lower portion against the internal wall surface of the hole.

Further, by providing a plural of the lock portions, it becomes possible to obtain further strong anti-extracting resistance as each of the upper and lower half portions of the plural of the lock portions bite upon the peripheral wall surface of the concrete hole.

The embodiments of the anchoring method according to the present invention are described in detail with reference to Fig. 23 to Fig. 31 as follows.

A sequence of the inter finishing material 17 and the final finishing material 18 are covered above the concrete layer 16. In the specified position of the concrete layer 16, a hole 11 is bored. The diameter L of this hole 11 is equivalent to the diameter enabling insertion of the lock portion 4 of the anchor assembly 10 in Fig. 23. Also, in the specified position of the above-mentioned equipment 19 to be fixed, a hole 15 having a diameter enabling passage through of the rod portion 6 of the anchor assembly is bored.

In the construction of the anchor assembly 10, this assembly has the lock portion 4 divided into the upper half portion 2 and the lower half portion 3 by taking the cut section 12 cut in the acute angle against the long axis of the anchor assembly. The planes according to the cut section 12 are identified as a cut section 10a of the upper half portion 2 and a cut section 10b of the lower half portion 3. The lock portion 4 has a rod portion 6 penetrating in the upper half portion 2 and the lower half portion 3. The rod portion 6 has a length as specified and to the comparatively longer portion having no threaded portion 7, the upper and lower half portions contact. On one end of the rod portion 6, threaded portion 7 is shaped, and on the other end of the rod portion 6, a stopper portion 8 is shaped. On the threaded portion 7, a nut 7 and a spring washer 20 are engaged when installing the anchor assembly to an object to be anchored. Also, as the stopper portion 8 has a diameter equivalent to the outer diameter of the lower half portion 3, it becomes possible to prevent the lower half portion falling from the rod portion 6. Furthermore, the tip portion 8a of the stopper portion 8 contacts with the bottom surface 11b of the hole 11 when the anchor assembly is inserted into the bottom of the hole 11. By this construction, the rotation of the rod portion together with the rotation of the nut 9 is preventable by the friction between the bottom of the hole 11 and the tip portion 8a of the stopper portion 8. Further, between each of the internal peripheral surfaces 2a and 3a of the upper and lower half portions 2 and 3 and the external peripheral surface 6a of the rod portion 6, the radial movable clearance J is provided as shown in Fig. 28 and Fig. 29. The radial clearance J is the clearance for enabling the upper half portion 2 and the lower half portion 3 to move toward the radial direction.

Also, an upper edge 2c of the upper half portion 2 and a lower edge 3c of the lower half portion 3 are rectangular against the axial direction of the rod portion 6. Accordingly, the force generated for tightening the nut 9 is easily transmitted to the lock portion 4. In applying the anchor assembly 10, the above lock portion 4 and the rod portion 6 are axially being inserted into the hole 11. Simultaneously, the hole 15 bored in the equipment to be anchored is guided into the rod portion 6 of the anchor assembly. The lock portion 4 and the rod portion 6 being inserted in the hole 11 stop by the tip 8a of the stopper 8 coming in contact with the bottom surface llb of the hole 11. Then the nut 9 is fastened after the nut 9 and the spring washer 20 engage with the threaded portion 7 of the rod portion 6. The force generated by driving the nut 9 is transmitted to the upper half portion 2 through the equipment 19. Accordingly, the upper half portion moves towards the axial direction, and the lower half portion 3 is pushed to the stopper portion 3.

Further, when the axial movements of the upper half portion 2 and the lower half portion 3 owing to the drive of the nut 9 come to a stop, the upper half portion 2 and the lower half portion 3 begin to move towards opposite radial directions by taking the cut section 12 with acute angles against the axial direction, as the boundary.

It is important that the upper half portion 2 and the lower half portion 3 radially move each other towards opposite directions.

Furthermore, the axial movements of the upper half portion 2 and the lower half portion are limited in the range of the aforementioned movable clearance. Namely, the radial movable clearance J before the upper and lower half portions will move exists uniformly around all surfaces of the internal peripherals of the upper and lower half portions. After the upper and lower half portions have finished their movements, the distribution of the clearance has become non-uniform. Namely, only one side portion of the internal periphery 2a, 3a contact the one side of the external periphery 6a of the rod portion 6. The contacting points are the opposite points against the moved direction of the upper and lower half portion 2 and 3. In describing the radial movements of the upper and lower half portions in other words with reference to Fig. 27 to Fig. 29, before fastening the nut 9, each of the external peripheral surfaces 2b and 3b are in positions being apart as much as the distance T from the center axial line N. After the upper and lower half portions had moved toward radial directions owing to the fastening of the nut 9, each of the external peripherals 2b and 3b of the upper and lower half portions moves to positions being apart as much as the distance K from the center axial line N.

As shown in the above description, by the movement of each of the upper and lower half portions, together with each of the acutely angled edges 12a, 12b of the upper and lower half portions intruded against the peripheral surface lla of the hole 11, each of the external surfaces 2b, 3b of the upper and lower half portions 2, 3 are pressed to the peripheral surface 11a of the hole 11 and finally fixed. Accordingly, the equipment la is fixed to the concrete layer 16 by the axial force generated by the rotation of the nut 9.

As described repeatedly, when the axial force extracting the anchor assembly 10 is applied, each of the acutely angled edges 12a, 12b of the upper and lower half portions 2 and 3 encroaches upon the peripheral surface 11a of the hole 11 and generates the resistance force. Further, as the frictional force between each of the external peripheral surfaces 2a, 3b and the peripheral surface 11a of the hole 11 generate the resistance, the extraction of the anchor assembly 10 is prevented.

In reference to Fig. 30, an anchor assembly installed by applying another anchoring method is shown. Namely, this example shows the anchor assembly fixing a base F on a foundation E. In this example, each of the acutely angled edges 12a, 12b of the upper and lower half portions 2 and 3 protrude into the peripheral surface 11a of the hole 11 bored in the foundation E, and simultaneously each of the external peripherals 2b and 3b of the upper and lower half portions 2 and 3 are pressed against the periphery 11a of the hole 11 and are fixed. Then, the base F comes to be anchored to the foundation E by the axial force received from the nut 9.

Referring to Fig. 31, a pipe structure G fixed in mortar layer by applying a plural of anchor assemblies 10 is shown. In this example, each bottom end of columns constructing the structure G is connected with the rod portion 6 of the anchor assembly 10.

For connecting the pipe column with the anchor assembly, it is common to apply a socket member having internal threads at both ends thereof.

Another embodiment according to the present invention is described with reference to Fig. 32 and Fig. 33 as follows. At first, in noting the anchor assembly 40 used in this embodiment, the lower half portion 43 is engaged with the thread of the rod portion. Namely, an internal surface 43a of the lower half portion 43 and the external surface 6c of the rod portion 6b corresponding to this internal surface 43a are threaded so these portions may be engaged. By applying this construction, it becomes possible to constrain the movement of the lower half portion 43 even if an axial force is applied to the lower half portion 43.

A sample case that the anchor assembly 40 is inserted in the hole 11 bored in the concrete layer the same as the embodiments shown in Fig. 23 to Fig. 31, is considered. Namely, when the upper and lower half portions 2 and 43 of the lock portion 44 inserted in the hole 11 bored in the concrete layer 16 move towards radial directions in the hole 11, the upper half portion 2 moves in the range of the radial movable clearance J defined between the internal peripheral surface 2a of the upper half portion 2 and the external surface 6c of the rod portion 6b, when the axial movement of the upper half portion 2 ceases. Furthermore, the lower half portion 43 also moves toward radial direction together with the rod portion 6b, in looking finely the movement of the anchor assembly 40 in the hole 11.

Another embodiment according to the present invention is described in detail with reference to Fig. 34 and Fig. 35 as follows.

In watching the anchor assembly 50 used in this embodiment, the assembly is comprised with a plural of lock portions 54 composed with a pair of the upper half portion 52 and the lower half portion 53. Further, boundary surfaces between neighboring lock portions 54 have axially rectangular surfaces. With application of these constructions, it becomes possible to easily transfer the axial force generated by the fastening of the nut 9 to the plurals of the lock portions 54. Further, when each of the upper and lower portions 52 and 53 of each lock portion 54 inserted in the hole 11 bored in the concrete layer 16 move towards radial directions in the hole 11, a plural of the upper and lower portions 52 and 53 move in the range of the radial movable clearance J shaped between the internal surface 52a, 53a and the external peripheral 6e of the rod portion 6d.

The modified anchor assembly 60 is provided with a projection 14a on the tip of the stopper portion 8d of the rod portion 6d. The projection 14a is provided along the radial direction of the anchor assembly. In inserting the anchor assembly 60 into the hole 11, the projection 14a intrudes into the bottom of the hole 11. Accordingly, it becomes possible to prevent the rotation of the rod portion 6d due to the rotation of the nut 9. Further, it may be possible to modify the extrusion 14a to another shape enabling prevention of the rotation of the rod portion 6d. It may also be possible to exchange the single nut of the anchor assembly with the double nut.

As described above, the upper and lower half portions moved towards the radial directions will return to the original positions simply by releasing the force loaded upon the upper half portion, and it becomes possible to take away the rod portion and lock portion from the hole 11. Also in the range of the radial movable clearance J, there does not occur any unreasonable load when the upper and lower half portions move towards the radial directions. Also, when the upper and lower half portions move towards the radial directions in the range of the radial movable clearance J, no unreasonable loads are generated

By the way, in this embodiment, "to increase the force" means "to transmit axially the force by fastening the nut 9" and "to release the force" means "to decrease the axial force by loosening the nut 9".

As explained in the above detailed description, the anchoring method according to the present invention is comprised with the following steps:
a step for letting the upper and lower portions of the lock portion move towards radial directions;
a step for letting each of the acutely angled edges of the upper and lower half portions encroach upon the peripheral wall of the hole;
a step for letting each external periphery of the upper and lower half portions push against the peripheral surface of the hole; and
by applying the above steps, it becomes possible to prevent the extraction of the anchor assembly from the hole and to fix the assembly into the object to fix. It further becomes possible to take out with ease the rod portion and the lock portion from the hole simply by reducing the force pressing the upper half portion by releasing the nut.

## Claims

1. An anchor assembly having a lower end for insertion into a hole and an upper end, and provided with a lock assembly comprising an upper half portion and a lower half portion divided by a cut as a boundary, characterised in that
said lock assembly is hollow and contains means extending from the upper end and operable therefrom to radially expand the lock assembly at the cut.

2. An anchor assembly according to claim 1, wherein said means is operable to axially compress said first and second portions to provide said expansion.

3. An anchor assembly according to claim 1 or 2, wherein said means comprises a rod portion extending inside said lock assembly.

4. An anchor assembly according to claim 3, wherein a clearance is provided between internal peripheries of said upper and lower portions and the external periphery of said rod portion.

5. An anchor assembly according to claim 3 or 4, further comprising:
a nut engaged with a threaded portion provided on said rod portion at its upper end; and
a stopper portion provided on the bottom portion of said rod portion for retaining said locking assembly on said rod portion.

6. An anchor assembly according to claim 3, 4 or 5, wherein said lower half portion is characterised by being provided with an internal thread for engaging with said threaded rod portion.

7. An anchor assembly according to any preceding claim, comprising plural lock assemblies each having a respective upper half portion and lower half portion and wherein each boundary surface between neighbouring assemblies is substantially perpendicular to the axis of the anchor assembly.

8. A releasable anchoring method comprising a step of inserting an anchor assembly according to any one of the preceding claims, into an anchor hole; axially urging said upper half portion and said lower half portion towards each other to create expansion in opposite radial directions along said acutely cut section through a range of axial clearance defined between each of the internal peripheral surfaces of said upper and lower half portions, and the internal peripheral of said hole, after axial movements of said upper and lower half parts cease; and releasing said anchor by letting said upper and lower half portions return to the original positions by releasing the axial force applied to said half portions to enable said anchor assembly to be extracted from said hole.

9. An anchoring method according to claim 8, wherein said step for axially urging said upper half portion and said lower half portion toward each other is achieved by engaging said lower half portion with a threaded portion of said means and forcing it to move in the range of said axial clearance defined between the external peripheral surface of said lower half portion and said internal periphery of said anchor hole bored into the object destined to fix said anchor assembly.
